(19)

**Europäisches Patentamt**

**European Patent Office**

**Office européen des brevets**

(11)  **EP 3 157 358 B1**

(12) **EUROPEAN PATENT SPECIFICATION**

(45) Date of publication and mention
of the grant of the patent:
**06.12.2017 Bulletin 2017/49**

(21) Application number: **15726619.8**

(22) Date of filing: **04.06.2015**

(51) Int Cl.:
**A23L 2/52** *(2006.01)*          **A23L 2/66** *(2006.01)*

(86) International application number:
**PCT/EP2015/062526**

(87) International publication number:
**WO 2015/193122 (23.12.2015 Gazette 2015/51)**

(54) **READY-TO-DRINK ACIDIC PROTEINACEOUS BEVERAGE**

TRINKFERTIGE, SÄURE, PROTEINHALTIGE GETRÄNKE

BOISSON PROTÉIQUE ACIDE PRÊTE À BOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2014 EP 14172772**

(43) Date of publication of application:
**26.04.2017 Bulletin 2017/17**

(73) Proprietors:
 • **Unilever PLC**
  **London, Greater London EC4Y 0DY (GB)**
  Designated Contracting States:
  **CY GB IE MT**
 • **Unilever NV**
  **3013 AL Rotterdam (NL)**
  Designated Contracting States:
  **AL AT BE BG CH CZ DE DK EE ES FI FR GR HR
  HU IS IT LI LT LU LV MC MK NL NO PL PT RO RS
  SE SI SK SM TR**

(72) Inventors:
 • **LEMMERS, Marc**
  **3133 AT Vlaardingen (NL)**
 • **VELIKOV, Krassimir, Petkov**
  **3133 AT Vlaardingen (NL)**
 • **ZUIDAM, Nicolaas, Jan**
  **3133 AT Vlaardingen (NL)**

(74) Representative: **Warner, Guy Jonathan**
  **Unilever PLC**
  **Unilever Patent Group**
  **Colworth House**
  **Sharnbrook**
  **Bedford, Bedfordshire MK44 1LQ (GB)**

(56) References cited:
  **WO-A1-2011/131457      US-A- 5 964 983
  US-B1- 6 485 767**

 • **DATABASE CAPLUS [Online] CHEMICAL
  ABSTRACTS SERVICE, COLUMBUS, OHIO, US;
  4 June 2009 (2009-06-04), Maeda Yoshiki et al.:
  "Microfibrillated cellulose containing stabilizers
  for milk containing beverages and beverages
  containing the stabilizers", XP002732001,
  retrieved from stn Database accession no.
  2009:669789 & JP 2009 118821 A (TAIYO
  KAGAKU KK) 4 June 2009 (2009-06-04)**
 • **DATABASE WPI Week 200477 Thomson
  Scientific, London, GB; AN 2004-778371
  XP002732002, & JP 2004 305005 A (ASAHI KASEI
  KK) 4 November 2004 (2004-11-04)**

EP 3 157 358 B1

**Description**

**TECHNICAL FIELD OF THE INVENTION**

The present invention relates to a ready-to-drink proteinaceous beverage. More particularly, the invention provides a having a proteinaceous beverage comprising:

- 0.1-10 wt.% of vegetable protein;
- 0.01-2.0 wt. of amorphous cellulose microfibrils originating from defibrillated primary cell wall material;
- 0-20 wt.% fat; and
- at least 78 wt.% of water,

wherein the beverages contains no dairy protein.

The amorphous cellulose microfibrils employed in the present beverage can be obtained by essentially completely defibrillating cellulosic fibres that are found in primary cell wall material. The proteinaceous beverage of the present invention has a particularly pleasant, velvety mouthfeel.

The invention also provides a method of preparing the aforementioned ready-to-drink beverage.

**BACKGROUND OF THE INVENTION**

Consumers have become more knowledgeable about protein and its role in a healthy diet. This new understanding has had a profound effect, stimulating consumer interest and demand for healthier beverages that are fortified with protein. Because beverages are a convenient way to incorporate protein into the diet, manufacturers continue to formulate new products in an effort to make protein more accessible to a wider group of consumers.

The two most popular beverage proteins are whey and soy, and their various isolate derivatives. According to the U.S. Food and Drug Administration, the consumption of food products rich in soy protein can reduce cholesterol, enhance athletic performance, and even aid in the battle against diabetes.

In addition, interest for milk replacement by vegetable protein has increased in view of, on the one hand, issues in relation to over-sensitivity and/or intolerance towards milk constituents experienced by growing numbers of consumers and, on the other hand, elevated milk protein prices and supply issues that some manufacturers are experiencing relative to this commodity. Vegetable proteins, extracted from, for example, soybeans, maize, rice, peas, wheat, sorghum and almond have been proposed to replace milk proteins, either partially or totally, depending on the product system, and dairy-like products have been developed based entirely on soy protein.

In order to improve the mouthfeel of vegetable protein based beverages it is known to include one or more thickening agents, e.g. carrageenan, gellan cum or carboxymethyl cellulose (CMC). These thickening agents can be used to improve the stability of the beverages.

WO 2011/131457 describes a soy protein based beverage comprising 0.01-0.4 wt.% of insoluble cellulosic fibres. The patent example discloses a soy beverage that contains 0.05 wt.% citrus fibres.

The mouthfeel characteristics of vegetable protein based beverages can still be improved. Efforts to achieve this have had only limited success because the use of thickening agents to manipulate mouthfeel has repercussions for both mouthfeel attributes and other important product properties such as viscosity and stability.

**SUMMARY OF THE INVENTION**

The inventors have discovered that a ready-to-drink proteinaceous beverage that combines excellent mouthfeel characteristics with high stability and desirable rheological properties can be produced by introducing a small amount of amorphous cellulose microfibrils originating from defibrillated primary cell wall material. Insoluble cellulosic fibres such as the citrus fibres disclosed in WO 2011/131457 do not contain significant quantities of cellulose microfibrils as cellulose microfibrils are an integral part of these cellulosic fibres.

Accordingly, one aspect of the invention relates to a ready-to-drink proteinaceous beverage having a pH of 3-7.5 and a G' from 0.01 Pa to 10 kPa at 20°C, said beverage comprising

- 0.1-10 wt.% of vegetable protein;
- 0.01-2.0 wt. of amorphous cellulose microfibrils originating from defibrillated primary cell wall material, said amorphous cellulose microfibrils having a length of at least 0.5 $\mu$m, a thickness of less than 50 nm, and having an average degree of crystallinity of less than 50%;
- 0-20 wt.% fat; and
- at least 78 wt.% of water,

wherein the beverages contains no dairy protein.

The aforementioned amorphous cellulose microfibrils can be obtained from primary cell wall material by defibrillating the cellulosic fibres contained therein. This may suitably be done by subjecting the cellulosic fibres of the primary cell wall material to mechanical energy and/or cavitation thereby disentangling the cellulosic fibres and releasing the constituent microfibrils.

Highly defibrillated (microfibrillated) cellulosic fibres originating from primary cell wall material have been described in US 5.964,983. The Examples of this US patent describe how a suspensions of purified sugar beet cellulose was defribillated in a GAULIN homogenizer. It is stated that in the alimentary field microfibrillated cellulose can stabilize emulsions, act as an aroma support, a gelling agent and especially as a thickening agent; it can replace or act in synergy with other thickening agents already used in this field, such as xanthan, CMC, or microcrystalline celluloses.

The present invention also provides a method for the preparation of a ready-to-drink proteinaceous beverage as described above, the method comprising the steps of:

- providing a suspension of water and primary cell wall material; and
- subjecting this suspension to at least one pass through a homogenizer at a pressure of at least 250 bar

wherein vegetable protein is introduced into the suspension before, during or after the homogenisation step.

## DETAILED DESCRIPTION OF THE INVENTION

A first aspect of the present invention relates to a ready-to-drink proteinaceous beverage having a pH of 3-7.5 and a G' from 0.01 Pa to 10 kPa at 20°C, said beverage comprising

- 0.1-10 wt.% of vegetable protein;
- 0.01-2.0 wt. of amorphous cellulose microfibrils originating from defibrillated primary cell wall material, said amorphous cellulose microfibrils having a length of at least 0.5 $\mu$m, a thickness of less than 50 nm, and having an average degree of crystallinity of less than 50%;
- 0-20 wt.% fat; and
- at least 78 wt.% of water,

wherein the beverages contains no dairy protein.

The term "protein" as used herein refers to polypeptides comprising at least 10 amino acid residues, preferably at least 30 amino acid residues.

The term 'fat' as used herein refers to lipids selected from triglycerides, diglycerides and combinations thereof.

The term "defibrillated primary cell wall material" as used herein refers to primary cell wall material in which the cellulosic fibres that are composed of intertwined cellulose microfibrils have largely been disentangled to release the constituent cellulose microfibrils.

The term "cellulose microfibrils" refers to cellulose-based microfibrils that have been released from the cellulosic fibres or other cell wall material that they were a part of.

The crystallinity of the cellulose microfibrils can be determined by the protocol described in the Examples. The same holds for the thickness and length of the cellulose microfibrils.

The elastic modulus (G') of the proteinaceous beverage can suitably be measured using the protocol described in the Examples.

Unless indicated otherwise, percentages mentioned in this document are to be construed as weight percentage. Weight percentage (wt.%) is calculated on the total weight of the composition unless otherwise stated.

For the avoidance of doubt any, any feature of one aspect of the present invention may be utilised in any other aspect of the invention. The word "comprising" is intended to mean "including" but not necessarily "consisting of" or "composed of". In other words, the listed steps or options need not be exhaustive.

The beverage of the present invention preferably is a liquid having a viscosity at 20°C of less than 0.5 Pa.s at a shear rate of 50 s$^{-1}$. More preferably, the beverage has a viscosity at 20°C of less than 0.3 Pa.s at a shear rate of 50 s$^{-1}$. Viscosity of the proteinaceous beverage can suitably be measured using the protocol described in the Examples.

According to another preferred embodiment the proteinaceous beverage is a shear thinning fluid, having a ratio of low shear rate (1 s$^{-1}$) viscosity to pouring viscosity (50 s$^{-1}$) of 2 to 2000, more preferably of 3 to 500 and most preferably of 4 to 300.

In accordance with one preferred embodiment, the proteinaceous beverage has a neutral pH in the range of pH 6 to pH 7.5, more preferably in the range of pH 6.2 to pH 7.3 and most preferably in the range of pH 6.5 to pH 7.1.

In accordance with another preferred embodiment, the proteinaceous beverage has an acidic pH in the range of pH 3 to 5.5, more preferably in the range of pH 3.5 to pH 5, and most preferably in the range of pH 3.8 to pH 4.5.

Suitable acids that can be employed include hydrochloric acid, phosphoric acid, lactic acid, malic acid, citric acid, and ascorbic acid. An acidic pH can also be achieved by the addition of both juice and acid.

Suitable juices that may be present in the proteinaceous beverage include fruit juice, herb juice, leaf juice of choice, or mixtures of these. The juice of choice can example given be made of apple, apricot, banana, grapefruit, grape, guava, lemon, lime, mandarine, mango, orange, peach, pommel, pumpkin, squash, tangerine, tomato, carrot, tea, mint, and mixtures thereof. Juices may suitably be incorporated in the beverage in a concentrated form.

The present beverage typically has a G' at 20°C in the range of 0.01 Pa to 10 kPa, more preferably in the range of 0.1 Pa to 1 kPa and most preferably in the range of 1 Pa to 100 Pa.

The proteinaceous beverage of the present invention preferably contains not more than 0.1 % of dairy protein, and most preferably no dairy protein. Likewise, the beverages according to the present invention preferably contain less than 0.1 wt.% of lactose, most preferably the beverage is free of lactose.

The vegetable protein contained in the present beverage is preferably obtained from soybeans, maize, rice, peas, wheat, sorghum and almond and combinations thereof. More preferably, the vegetable protein is selected from soy protein, rice and almond and combinations thereof. Most preferably, the vegetable protein is soy protein.

The vegetable protein content of the beverage preferably lies in the range of 0.2-7 wt.%, more preferably in the range of 0.3-5 wt.% and most preferably of 0.6-3 wt.%.

Cellulose is a linear polymer of $\beta$-(1→4)-D-glucopyranose units. Cellulose molecules typically consist of between 2,000-14,000 of such units and are essentially water-insoluble. Cellulose is an important structural component of the cell wall of green plants, notably the primary cell wall and secondary cell wall.

Plant cell walls typically contain up to three strata or layers:

- the middle lamella, a layer rich in pectins.
- the primary cell wall, generally a thin, flexible and extensible layer formed while the cell is growing.
- the secondary cell wall, a thick layer formed inside the primary cell wall after the cell is fully grown. It is not found in all cell types.

Cellulose is found in plants as microfibrils, which typically have a thickness of 2-20 nm and a length of 100-40,000 nm. Cellulose microfibrils are usually associated to a high degree in walls or fibres. The microfibrils in secondary walls are organised into highly oriented layers which form a fibre which are very difficult to dissociate; the microfibrils in primary walls are deposited in a disorganised fashion. The parenchyma is a typical example of primary wall tissue. While it is difficult, if not impossible, to separate secondary wall cellulose microfibrils without damaging them, it is easy to dissociate primary wall microfibrils, not only because of their looser organisation but also because interstitial polysaccharides (hemicelluloses, pectins and lignin), which may be charged, constitute a large percentage of these walls.

In the primary (growing) plant cell wall, the major carbohydrates are cellulose, hemicellulose and pectin. The cellulose microfibrils are linked via hemicellulosic tethers to form the cellulose-hemicellulose network, which is embedded in the pectin matrix. Primary cell walls characteristically extend (grow) by a mechanism called acid growth, which involves turgor-driven movement of the strong cellulose microfibrils within the weaker hemicellulose/pectin matrix, catalyzed by expansin proteins.

The amorphous cellulose microfibrils employed in accordance with the present invention preferably originate from plant parenchymal tissue. 'Parenchyma' is a versatile ground tissue that generally constitutes the "filler" tissue in soft parts of plants. It forms, among other things, the cortex and pith of stems, the cortex of roots, the mesophyll of leaves, the pulp of fruits, and the endosperm of seeds. Parenchyma cells are living cells and may remain meristematic at maturity, meaning that they are capable of cell division if stimulated.

A plant cell wall contains cellulose and hemicellulose, pectin and in many cases lignin. This contrasts with the cell walls of fungi (which are made of chitin), and of bacteria, which are made of peptidoglycan. Primary plant cell walls contain lignin only in minor amounts, if at all.

Preferably the amorphous cellulose microfibrils originate from a plant material selected from fruits, roots, bulbs, tubers, seeds and combination thereof; more preferably from a plant material selected from citrus fruit, tomato fruit, peach fruit, pumpkin fruit, kiwi fruit, apple fruit, mango fruit, sugar beet, beet root, turnip, parsnip, maize, oat, wheat, peas and combinations thereof; and even more preferably from a plant material selected from citrus fruit, tomato fruit and combinations thereof. A most preferred source of the cellulose microfibrils is parenchymal tissue (e.g. albedo and/or the flavedo) from citrus fruit.

The amorphous cellulose microfibrils of the present invention can be obtained from primary cell wall material by defibrillating the cellulosic fibres contained therein. This may suitably be done by subjecting the cellulosic fibres of the primary cell wall material to mechanical energy and/or cavitation thereby disentangling the cellulosic fibres and releasing the constituent microfibrils. This treatment can applied to primary cell wall material *per se,* optionally after one or more purification steps. Alternatively, the cellulosic fibres can be combined with one or more of the other ingredients of the ready-to-drink beverage and the resulting mixture is subjected to mechanical energy and/or cavitation to release the cellulose microfibrils *in situ.*

The amorphous cellulose microfibrils employed in accordance with the present invention are characterised by a very high self-suspending capacity. The amorphous cellulose microfibrils used in the beverage according to the invention preferably have a self-suspending capacity from 50 to 100% at 0.3 wt.%, preferably from 80 to 100% at 0.3 wt.%, more preferably from 80 to 100% at 0.2 wt.% and most preferably from 80 to 100% at 0.1 wt.%. The 'self-suspending capacity' of a cellulosic fibre material can be determined using the following protocol.

0.3 g of the cellulosic fibre material (calculated as dry weight) is added to 50 ml of demineralised water in a 100 ml graduated measuring cylinder with a diameter of 2.5 cm. The pH of the suspension is measured and adjusted to pH 4.2 if needed using aqueous acetic acid, after which the cylinder is filled to 100 ml. The cylinder is gently turned up and down for 10 times to ensure a proper wetting of the fibrous material. After 24 hours at room temperature the volume occupied by the cell wall material suspension is determined and expressed as a percentage of total volume. For example, if the volume occupied by the cell wall material suspension is 80 ml, this is expressed as a self-suspending capacity of 80%.

The dry weight of the cellulosic fibre material, as used above, is determined by drying 6.00 g of this material in an oven at 120°C during 1 hr and determining the weight of the resulting dried material. Dry weight = 100% * (weight after drying (g)/ 6 (g)).

If the self-suspending capacity is determined to be 100%, the protocol is repeated using 0.2 g cell wall material (calculated as dry weight). If the self-suspending capacity is still 100% the protocol is repeated using 0.1 g cell wall material (calculated as dry weight).

The amorphous cellulose microfibrils, preferably are contained in the proteinaceous beverage in a concentration of 0.05-1.2 wt.%, more preferably of 0.1-0.8 wt.% and most preferably of 0.3-0.6 wt.%.

The amorphous cellulose microfibrils employed in accordance with the present invention typically have a thickness of less than 40 nm, more preferably of less than 20 nm and most preferably of less than 10 nm.

The length of the amorphous cellulose microfibrils preferably is at least 1 $\mu$m, more preferably at least 3 $\mu$m and most preferably at least 5 $\mu$m.

Purified cellulose is used as a starting material for the manufacture of a number of watersoluble hydrocolloids, such as CMC. The manufacture of these cellulose derivatives involves chemical modification of the natural cellulose material. CMC, for instance, is synthesised by the alkali-catalyzed reaction of cellulose with chloroacetic acid. The polar (organic acid) carboxyl groups render the cellulose soluble and chemically reactive.

According to a particularly preferred embodiment, the amorphous cellulose microfibrils used in accordance with the present invention are natural cellulose microfibrils which have not been chemically modified. Unlike, for instance, microcrystalline cellulose, the cellulose molecules within the present cellulose microfibrils are essentially non-hydrolysed. Typically, the cellulose molecules contained within the amorphous cellulose microfibrils employed in accordance with the present invention contain at least 1,000, more preferably at least 2,000 $\beta$-(1→4)-glucopyranose units, and are preferably non-depolymerised.

The average degree of crystallinity of the amorphous cellulose microfibrils preferably is less than 40%, more preferably less than 35% and most preferably less than 30%.

The following table shows the average degree of crystallinity of typical sources of cellulose microfibrils.

*Average degree of crystallinity of cellulose (all polymorph cellulose I)*

| Source | Average degree of crystallinity (%) |
|---|---|
| Tomato fibres | 32 |
| Citrus fibre (Citrus Fibre AQ+N) | 29 |
| Nata de Coco | 74 |
| Cotton | 72 |
| Wood pulp fibre (Meadwestvaco) | 61 |
| Sugar beet fibre (Nordix Fibrex) | 21 |
| Pea fibres (PF200vitacel) | 42 |
| Oat fibres (780 Sunopta) | 43 |
| Corn hull (Z-trim) | 48 |
| Sugar cane Fibre (Ultracel) | 49 |

The amorphous cellulose microfibrils employed in accordance with the present invention can suitably be obtained from an insoluble fibre fraction of the primary cell wall material. Such an insoluble fibre fraction can be obtained by removing soluble and unbound sugars, protein, polysaccharides, oil soluble oils, waxes and phytochemicals (e.g. carotenoids, lycopene). This is suitably achieved using well known techniques including cutting up the cell wall material, cooking, homogenisation, washing, centrifugation, decanting and drying.

Preferably, the proteinaceous beverage according to the invention contains 0.01 to 2 wt.%, more preferably 0.05-0.8 wt.% and most preferably 0.1-0.7 wt.% of insoluble fibre material from primary cell wall material. Besides the amorphous cellulose microfibrils, this insoluble firbre material may contain appreciable amounts of hemicelluloses, pectin and lignin.

Preferably the insoluble fibre material employed in accordance with the present invention comprise at least 50 wt.% of cellulose microfibrils, more preferably at least 60 wt.%, even more preferably at least 70 wt.%, still more preferably at least 80 wt.%, even still more preferably at least 90 wt.% and most preferably at least 95 wt.% of cellulose microfibrils.

Although plant cell walls contain hemicelluloses and pectin in addition to cellulose, the insoluble fibre material used in the proteinaceous beverage does not necessarily contain hemicellulose and/or pectin.

The insoluble fibre material typically comprises 0-40 wt.%, more preferably 5-40 wt.%, and most preferably in an amount from 10-30 wt.% of hemicellulose.

Likewise, the pectin content of the insoluble fibre material typically lies in the range of 0-30 wt.%, more preferably of 5-30 wt.% and most preferably of 10-20 wt.%.
Preferably, the insoluble fibre material comprises hemicelluloses and pectin.

The fat content of the present beverage preferably lies in the range of 0.1 to 10 wt.%, most preferably in the range of 0.2 to 5 wt.%. Examples of fats that may be employed in the present beverage include vegetable oils, fish oils, milk fat, fractions of these oils and fats and combinations thereof. Preferably, the fat employed is a vegetable oil or a fraction thereof.

Typically, the water content of the proteinaceous beverage is at least 78 wt.%, more preferably at least 85 wt.% and most preferably at least 90 wt.%.

The proteinaceous beverage of the present invention may suitably contain other ingredients besides the vegetable protein, the amorphous cellulose microfibrils and water. Examples of such other ingredients include hydrocolloids, sugars, artificial sweeteners, fruit juice, colouring, flavouring, vitamins, minerals etc.

Preferably, the proteinaceous beverage comprises 0.005 to 1 wt.%, more preferably 0.1 to 0.5 wt.% of hydrocolloid other than amorphous cellulose microfibrils.

According to a preferred embodiment, the hydrocolloid is selected from pectin, soluble soybean polysaccharide, carboxymethylcellulose, gelatin, arabinoxylan, dextrin, starch, maltodextrin, xanthan gum, alginate, gellan gum, welan gum, diutan gum, rhamsan gum, carrageenan, guar gum, agar, gum arabic, gum ghatti, karaya gum, gum tragacanth, tamarind gum, locust bean gum, and combinations thereof.

According to yet another preferred embodiment, the beverage comprises 0.01 to 6 wt.%, more preferably 0.5 to 5.5 wt.% and most preferably 2 to 5 wt.% of saccharide selected from sucrose, lactose, glucose, fructose and combinations thereof. More preferably, the saccharide is selected from sucrose, glucose, fructose and combinations thereof. Most preferably, the saccharide is sucrose. Optionally the beverages may comprise sweeteners such as sucralose, aspartame and stevia.

Another aspect of the present invention relates to a method for preparing a ready-to-drink proteinaceous beverage as defined herein before, the process comprising the steps of:

- providing a suspension of water and primary cell wall material; and
- subjecting this suspension to at least one pass through a homogenizer at a pressure of at least 250 bar

wherein vegetable protein is introduced into the suspension before, during or after the homogenisation step.

Preferably, vegetable protein is introduced before or after the homogenisation step. Most preferably, the vegetable protein is introduced into the suspension after the homogenisation step.

The suspension that is passed through the homogenizer typically contains 0.005-2 wt.%, more preferably 0.1-1.5 wt.% and most preferably 0.2-1.0 wt.% of primary cell material.

In the present method besides vegetable protein also other ingredients may be introduced into the suspension before, during or after homogenisation. In accordance with a preferred embodiment aqueous liquid is introduced into the suspension after homogenisation. Typically aqueous liquid is added after homogenisation to reduce the concentration of amorphous cellulose microfibrils by at least a factor 2.

The homogenisation pressure employed in the present method preferably is at least 500 bar, even more preferably at least 700 bar and most preferably at least 1000 bar..

In accordance with a preferred embodiment of the present invention the suspension is passed at least two times through the homogenizer

The invention is further illustrated by the following non-limiting examples.

## EXAMPLES

Degree of crystallinity of cellulose microfibrils

Wide angle X-ray scattering (WAXS) is used to determine the degree of crystallinity, using the following protocol. The measurements were performed on a Bruker D8 Discover X-ray diffractometer with GADDS (General Area Detector Diffraction System) (From Bruker-AXS, Delft, NL) (Part No: 882-014900 Serial No: 02-826) in a theta/theta configuration. A copper anode was used, and the K- alpha radiation with wavelength 0.15418 nm was selected.

The instrumental parameters as used are shown in the table below.

Table 2, D8 Discover instrumental parameters for WAXS measurements

|  | $2\theta$ (9 - 42°) |
| --- | --- |
| Theta 1 | 10.000 |
| Theta 2 | 10.000 / 25.000 |
| Detector Bias (kV / mA) | 40 / 40 |
| Time (sec) | 300 |
| Collimator (mm) | 0.3 |
| Detector distance (cm) | 25 |
| Tube Anode | Cu |

The degree of crystallinity was calculated from the following equation:

$$Xc\ (\%) = \frac{\text{Area crystalline phase}}{\text{Area crystalline} + \text{amorphous phase}} * 100\%$$

The areas of the diffraction lines of the crystalline phase were separated from the area of the amorphous phase by using the Bruker EVA software (version 12.0).

Thickness and length of cellulose microfibrils

Transmission electron microscopy (TEM) can be used to determine the thickness and length of cellulose microfibrils (D. Harris et. al., Plant Physiology, 2010(153), 420). The dispersion of plant source rich in primary cell wall material was diluted in distilled water resulting in a thin layer of mostly single fibres or single clusters of fibres. The dispersions were imaged on a Carbon only 300 mesh Copper TEM grid (Agar Scientific) and imaged in the Tecnai 20 Transmission electron microscope (FEI Company). To enhance image contrast between individual microfibrils, a 2 % phosphotunstic acid solution at pH 5.2 was used as a negative stain. For this the fiber-loaded TEM grids were incubated on 2% phosphotunstic acid and air-dried after removal of the excess of fluid. The specimen was imaged at 200 kV.

Viscosity and Elastic Modulus (G')

The visco-elastic properties of a beverage can be determined using an Anton Paar MCR301 stress controlled rheometer and a serrated Coutte cell geometry consisting of a cup and measurement cylinder (CC27/P6).

The sample is introduced into the measurement cell using a plastic pipette from which the tip had been removed so as to minimize damage to the structure of the sample.

Measurements consist of two strain rate sweeps between 0.001-500 1/s, with a period of 30 min in between to ensure equilibrium. Each viscosity value is an average of two values, one from each sweep. G' is determined at a frequency of 1 Hz and a strain of 0.1 %. All measurements are conducted at 20°C.

Determination of the content of amorphous cellulose microfibrils

The amount of amorphous cellulose microfibrils in a proteinaceous beverage can suitably be determined using centrifugation and dry weight determination.

The beverage containing the cellulose microfibrils is first centrifuged for 60 min at 4250 relative centrifugal force. The obtained pellets are re-dispersed into a 800 g dispersion (total weight) using demineralised water at room temperature. Next, the dispersion is centrifuged for 30 min at 4250 relative centrifugal force. The obtained pellets are re-dispersed into a 800 g dispersion (total weight) using demineralised water and centrifuged again for 20 min at 4250 relative centrifugal force.

The dry weight of the obtained pellet is determined using an infrared oven scale (Mettler Toledo HB43-S) at 120°C operated according to manufacturer's instructions.

### Example 1

*Preparation of amorphous cellulose microfibrils*

Cellulose containing cell wall material was obtained or prepared as shown in Table 1.

Table 1

| Source | Brand name | Supplier |
|---|---|---|
| Citrus fibre (powder) | Citrus fibre AQ+N | Herbafood Ingredients GmbH |
| Tomato fibre (dispersion) | n.a. | Prepared as described |
| Mango puree (dispersion) | n.a. | Prepared as described |
| Mango fibre (dispersion) | n.a. | Prepared as described |

The composition of the primary cell wall material is shown in Table 2.

Table 2

| Source | Insoluble fibres (wt.%) | % by weight of insoluble fibres | | |
|---|---|---|---|---|
| | | Cellulose | Hemicellulose | Pectin |
| Citrus fibre (powder) | >93* | 50 | 15-20 | 10-15 |
| Tomato fibre (dispersion) | 3.4 | 50 | 15-20 | 10-15 |
| Mango puree (dispersion) | 1.0** | ND | ND | ND |
| Mango fibre (dispersion) | 4.9 | ND | ND | ND |
| * as provided by the supplier; ** estimated from literature data (P. Ramulu, P. Udayasekhara Rao / Journal of Food Composition and Analysis 16 (2003) 677-685); ND - not determined. | | | | |

*Preparation of cellulose microfibrils from tomato fibres*

To 160.0 grams of a Hotbreak tomato paste, 28-30% Brix (Agraz, S.A.U.) 640 grams water was added to a total of 800 grams. Mixture was stirred for 3 minutes using a hand blender (Braun 300W household type 418554). Next the suspension was centrifuged (2 batches in a Beckman Avanti J-25, rotor Ja10) for 60 min at 4250 relative centrifugal force and 20 degrees Celsius. Supernatant was carefully decanted from the sediment. Combined pellets (sediment) were redispersed into a 800 g dispersion (total weight) using demineralised water and stirred with the hand blender for 3 minutes and centrifuged for 30 min at 4250 relative centrifugal force. Next supernatant was carefully decanted from the sediment. Combined pellets (sediment) were redispersed into a 800 g dispersion (total weight) using demineralised water and stirred with the hand blender for 3 minutes and centrifuged for 20 min at 4250 relative centrifugal force. Finally the supernatant was carefully decanted from the sediment and the dry weight of the combined pellets was determined at 3.38 wt.% as insoluble fibre fraction using an infra red oven balance (Mettler Toledo HB43-S). The self suspending capacity of the resulting material at 0.3 wt.% was 72%.

39.5 grams of the tomato fibre was added to 560.5 grams of demineralised water and mixed using a handblender for 1 minute. Next the mixture was homogenised (Niro-Soavi NS2002H) at 150 bar (100 bar first stage and 50 bar second stage). The self suspending capacity of the resulting material at 0.3 wt.% was 100%.

*Preparation of cellulose microfibrils from mango fibre*

The peels and kernels were removed from Mango fruit (total weight 1035.4 g). The Mango was then cut in pieces of approx. 1 × 1 × 1 cm (total weight 722.5 g). Next, the Mango parts were cooked for 30 minutes (using induction pans cooking) using stirring with a spoon until Mango parts were broken into a smooth product with final weight of 570.2 g. Care was taken not to cook the mixture to dryness. Demineralised water (Barnstead, Nanopure Diamond) (152.3 g) was added to the cooked pulp to compensate for evaporation losses. The mango pulp was centrifuged (in 2 batches, Beckman Avanti J-25, rotor Ja10) for 75 min at 4250 relative centrifugal force and 20 degrees Celsius (wash 1). After the first centrifugation step, combined pellets (sediment) from the two batches were re-dispersed into a 800 g dispersion (total weight) using demineralised water (wash 2). Next, the dispersion was centrifuged for 30 min at 4250 relative centrifugal force. The obtained pellets were re-dispersed into a 800g dispersion (total weight) using demineralised water and centrifuged again for 20 min at 4250 relative centrifugal force (wash 3). The dry weight of the obtained pellet of as insoluble fibre fraction was measured to be 4.90% by using an infrared oven balance. The self suspending capacity of the resulting material at 0.3 wt.% was 63%.

*Preparation of cellulose microfibrils from mango puree*

The peels and kernels of the mango's were removed and the mango's were cut into small pieces of approximately 1 × 1 × 1 cm. Next the mango pieces were cut for 4 minutes using a kitchen hand blender (Braun 300W household type 418554) into a puree. The puree was milled in a colloid mill (O. Krieger CH-4132 Muttenz Maschinen und Metalbau AG) by circulating with the widest gap for 2 minutes. The gap size was gradually decreased to the smallest position possible and allowed to circulate for additional 10 minutes. Finally the dry weight (10.7 wt.%) of the puree was determined using a balance (microwave dry weight measurement P60 T110, CEM SMART Turbo). The amount of insoluble fibre fraction (1.03 wt.%) was assumed using literature data (P. Ramulu and P. Udayasekhara Rao, Journal of Food Composition and Analysis 16 (2003) 677-685). The pH of this mango puree was 4.51.

*Preparation of cellulose microfibrils from citrus fibre*

20.1 g of citrus fibre (Herbacell™ Citrus Fibre AQ+ type N; ex Herbafood) was mixed with 990 g of demi-water. This dispersion was pre-sheared using a Silverson for 10 minutes at 3000 rpm, employing the screw-on cap with the smallest holes. The resulting slurry was passed through a micro-fluidizer (Microfluidics, M 110S) using the G10Z-chamber, operating at a pressure of 1200 bar in the interaction chamber). The resulting defibrillated citrus fibre paste was collected and stored in the fridge until further use.

## Example 2

*Preparation of ready-to-drink proteinaceous beverage*

Soy milk beverages were prepared on the basis of the formulations shown in Table 3.

Table 3

|  | RTD beverage 1 (wt.%) | RTD beverage A (wt.%) |
|---|---|---|
| Ascorbic acid | 0.02 | 0.02 |
| Water | 49.78 | 49.78 |
| Sucrose | 2.96 | 2.96 |
| Trisodium citrate (5.5H$_2$O) | 0.1 | 0.1 |
| Sterilised soy base [1] | 46.43 | 46.43 |
| Vitamin mix | 0.02 | 0.02 |
| Refined salt | 0.099 | 0.099 |
| Vanilla flavour | 0.088 | 0.088 |
| Citrus fibre |  | 0.5 |

(continued)

|  | RTD beverage 1 (wt.%) | RTD beverage A (wt.%) |
|---|---|---|
| Defibrillated citrus fibre | 0.5 | |
| [1] ex Sunopta 5.6 wt.% protein, 11.8 wt.% solids) | | |

The beverages were prepared by adding half of the water and the other ingredients, except the citrus fibres, to the soybase while stirring with a colloid mill (Silverson, 4000rpm). This mixture was then homogenised at 180 bar using a high pressure homogeniser (GEA NS2002H). The citrus fibres were added to the rest of the water and hydrated for 60 minutes while mixing with a colloid mill (Silverson, 3000rpm). One citrus fibre dispersion was microfluidized as described in Example 1. Next, the citrus fibres dispersions were mixed into the resulting mixture using a Silverson.

## Example 3

*Sensory evaluation*

The soy milk beverages described in Example 2 were subjected to a sensory evaluation using a sensory panel which was trained to evaluate soy drinks. The panel consisted of 10 panelists. The panelists scored 6 attributes of the soy drinks, i.e. 4 mouthfeel attributes ('thick', 'Velvet' , 'powdery' and 'slimy') and 2 after feel attributes ('dry/rough' and 'sticky'). These attributes were scored on a scale of 0 to 15.
The panel scores so obtained are shown in Table 4.

Table 4

| Attribute | Beverage 1 | Beverage A | Sign. Difference (95%) |
|---|---|---|---|
| Thick | 7.77 | 3.33 | 0.65 |
| Velvet | 6.20 | 2.97 | 1.06 |
| Powdery | 3.86 | 3.41 | 0.67 |
| Slimy | 5.00 | 4.43 | 0.82 |
| Dry/rough | 8.10 | 8.33 | 0.51 |
| Sticky | 4.70 | 3.70 | 0.47 |

These results show that the beverage containing cellulose microfibrils originating from defibrillated cell wall material from citrus (Beverage 1) had a significantly more thick/velvety mouthfeel and a more sticky afterfeel than the beverage containing ordinary, non-defibrillated citrus fibres (Beverage A).

## Example 4

*Rheological analyses*

The soy milk beverages described in Example 2 were subjected to rheological analyses, using the methodology described herein before. The results are shown in Table 5 (all measurements at 20°C).

Table 5

|  | Beverage 1 | Beverage A |
|---|---|---|
| Viscosity at 1 s$^{-1}$ | 1.2 Pa.s | 11 mPa.s |
| Viscosity at 50 s$^{-1}$ | 83 mPa.s | 3.6 mPa.s |
| Ratio viscosities at 1 and 50 s$^{-1}$ | 15.1 | 3.4 |
| G' | 15.1 Pa | 0.195 Pa |

**Claims**

1. A ready-to-drink proteinaceous beverage having a pH of 3-7.5 and an elastic modulus (G') from 0.01 Pa to 10 kPa at 20°C, said beverage comprising

   • 0.1-10 wt.% of vegetable protein;
   • 0.01-2.0 wt. of amorphous cellulose microfibrils originating from defibrillated primary cell wall material, said amorphous cellulose microfibrils having a length of at least 0.5 $\mu$m, a thickness of less than 50 nm, and having an average degree of crystallinity of less than 50%;
   • 0-20 wt.% fat; and
   • at least 78 wt.% of water

   wherein the beverages contains no dairy protein.

2. Beverage according to claim 1, wherein the amorphous cellulose microfibrils have a thickness of less than 40 nm, preferably of less than 20 nm.

3. Beverage according to claim 1 or 2, wherein the average degree of crystallinity of the cellulose microfibrils is less than 40%.

4. Beverage according to any one of the preceding claims, wherein the amorphous cellulose microfibrils have a length at least 1 $\mu$m, more preferably at least 3 $\mu$m.

5. Beverage according to any one of the preceding claims, wherein the amorphous cellulose microfibrils have a self-suspending capacity in demineralised water in the range of 50 to 100% at a concentration of 0.3 wt.%.

6. Beverage according to any one of the preceding claims, wherein the beverage contains 0.02 to 0.8 wt.% of the amorphous cellulose microfibrils.

7. Beverage according to any one of the preceding claims, wherein the amorphous cellulose microfibrils originate from a plant material selected from citrus fruit, tomato fruit, peach fruit, pumpkin fruit, kiwi fruit, apple fruit, mango fruit, sugar beet, beet root, turnip, parsnip, maize, oat, wheat, peas and combinations thereof

8. Beverage according to any one of the preceding claims, wherein the vegetable protein is obtained from soybeans, maize, rice, peas, wheat, sorghum and almond and combinations thereof.

9. Beverage according to any one of the preceding claims, wherein the beverage is a shear thinning fluid, having a ratio of low shear rate (1 s$^{-1}$) viscosity to pouring viscosity (50 s$^{-1}$) of 2 to 2000.

10. Beverage according to any one of the preceding claims, wherein the beverage comprises 0.1 to 10 wt.% fat, more preferably 0.2 to 5 wt.% fat.

11. Beverage according to any one of the preceding claims, wherein the beverage further comprises 0.005 to 1 wt.% hydrocolloid selected from pectin, soluble soybean polysaccharide, carboxymethylcellulose, gelatin, arabinoxylan, dextrin, starch, xanthan gum, alginate, gellan gum, welan gum, diutan gum, rhamsan gum, carrageenan, guar gum, agar, gum arabic, gum ghatti, karaya gum, gum tragacanth, tamarind gum, locust bean gum, and combinations thereof.

12. Beverage according to any one of the preceding claims, wherein the beverage further comprises 0.01 to 6 wt.% saccacharide selected from sucrose, lactose, glucose, fructose and combinations thereof

13. A method for preparing a ready-to-drink proteinaceous beverage according to any one of the preceding claims, comprising the steps of:

    • providing a suspension of water and primary cell wall material; and
    • subjecting this suspension to at least one pass through a homogenizer at a pressure of at least 250 bar

    wherein vegetable protein is introduced into the suspension before, during or after the homogenisation step.;

**14.** Method according to claim 13, wherein the homogenisation pressure is at least 500 bar, even more preferably at least 700 bar.

**15.** Method according to claim 14 or 15, wherein the suspension that is passed through the homogenizer contains 0.005-2 wt.% of primary cell material.

**Patentansprüche**

**1.** Trinkbereites proteinhaltiges Getränk mit einem pH von 3-7,5 und einem Elastizitätsmodul (G') von 0,01 Pa bis 10 kPa bei 20°C, wobei das Getränk umfasst

- 0,1-10 Gew.-% pflanzliches Protein,
- 0,01-2,0 Gew.-% amorphe Cellulose-Mikrofibrillen, die von defibrilliertem primärem Zellwandmaterial stammen, wobei die amorphen Cellulose-Mikrofibrillen eine Länge von mindestens 0,5 $\mu$m, eine Dicke von weniger als 50 nm und einen mittleren Kristallinitätsgrad von weniger als 50% aufweisen,
- 0-20 Gew.-% Fett und
- mindestens 78 Gew.-% Wasser,

wobei die Getränke kein Milchprotein enthalten.

**2.** Getränk nach Anspruch 1, wobei die amorphen Cellulose-Mikrofibrillen eine Dicke von weniger als 40 nm, vorzugsweise von weniger als 20 nm, aufweisen.

**3.** Getränk nach Anspruch 1 oder 2, wobei der mittlere Kristallinitätsgrad der Cellulose-Mikrofibrillen weniger als 40% beträgt.

**4.** Getränk nach irgendeinem der vorhergehenden Ansprüche, wobei die amorphen Cellulose-Mikrofibrillen eine Länge von mindestens 1 $\mu$m, bevorzugter von mindestens 3 $\mu$m, aufweisen.

**5.** Getränk nach irgendeinem der vorhergehenden Ansprüche, wobei die amorphen Cellulose-Mikrofibrillen eine Selbstsuspendierfähigkeit in demineralisiertem Wasser bei einer Konzentration von 0,3 Gew.-% in dem Bereich von 50 bis 100% aufweisen.

**6.** Getränk nach irgendeinem der vorhergehenden Ansprüche, wobei das Getränk 0,02 bis 0,8 Gew.-% amorphe Cellulose-Mikrofibrillen enthält.

**7.** Getränk nach irgendeinem der vorhergehenden Ansprüche, wobei die amorphen Cellulose-Mikrofibrillen von einem Pflanzenmaterial stammen, das aus Citrusfrucht, Tomatenfrucht, Pfirsichfrucht, Kürbisfrucht, Kiwifrucht, Apfelfrucht, Mangofrucht, Zuckerrüben, Roten Rüben, Steckrüben, Pastinake, Mais, Hafer, Weizen, Erbsen und Kombinationen davon ausgewählt ist.

**8.** Getränk nach irgendeinem der vorhergehenden Ansprüche, wobei das pflanzliche Protein aus Sojabohnen, Mais, Reis, Erbsen, Weizen, Sorghum und Mandeln und Kombinationen davon erhalten wird.

**9.** Getränk nach irgendeinem der vorhergehenden Ansprüche, wobei das Getränk eine scherverdünnende Flüssigkeit mit einem Verhältnis der Viskosität bei niedriger Scherrate (1 s$^{-1}$) zur Gießviskosität (50 s$^{-1}$) von 2 bis 2000 aufweist.

**10.** Getränk nach irgendeinem der vorhergehenden Ansprüche, wobei das Getränk 0,1 bis 10 Gew.-% Fett, bevorzugter 0,2 bis 5 Gew.-% Fett, umfasst.

**11.** Getränk nach irgendeinem der vorhergehenden Ansprüche, wobei das Getränk ferner 0,005 bis 1 Gew.-% Hydrokolloid umfasst, ausgewählt aus Pektin, löslichem Sojabohnenpolysaccharid, Carboxymethylcellulose, Gelatine, Arabinoxylan, Dextrin, Stärke, Xanthan-Gummi, Alginat, Gellan-Gummi, Welan-Gummi, Diutan-Gummi, Rhamsan-Gummi, Carrageen, Guar-Gummi, Agar, *Gummi arabicum,* Ghatti-Gummi, Karaya-Gummi, Traganth-Gummi, Tamarinden-Gummi, Johannisbrot-Gummi und Kombinationen davon.

**12.** Getränk nach irgendeinem der vorhergehenden Ansprüche, wobei das Getränk ferner 0,01 bis 6 Gew.-% Saccharid, das aus Sucrose, Lactose, Glucose, Fructose und Kombinationen davon ausgewählt ist, umfasst.

13. Verfahren zur Herstellung eines trinkbereiten proteinhaltigen Getränks nach irgendeinem der vorhergehenden Ansprüche, das die Schritte umfasst:

• Bereitstellen einer Suspension von Wasser und primärem Zellwandmaterial und
• Unterwerfen dieser Suspension mindestens einem Durchlauf durch einen Homogenisator bei einem Druck von mindestens 250 bar,

wobei das pflanzliche Protein vor, während oder nach dem Homogenisierungsschritt in die Suspension eingeführt wird.

14. Verfahren nach Anspruch 13, wobei der Druck bei der Homogenisierung mindestens 500 bar, sogar bevorzugter mindestens 700 bar, beträgt.

15. Verfahren nach Anspruch 14 oder 15, wobei die Suspension, die durch den Homogenisator geführt wird, 0,005-2 Gew.-% primäres Zellmaterial enthält.

**Revendications**

1. Boisson protéinée prête à boire ayant un pH de 3-7,5 et un module élastique (G') de 0,01 Pa à 10 kPa à 20°C, ladite boisson comprenant

• 0,1-10 % en masse de protéine végétale ;
• 0,01-2,0 % en masse de microfibrilles de cellulose amorphe provenant d'un matériau de paroi de cellule primaire défibrillée, lesdites microfibrilles de cellulose amorphe ayant une longueur d'au moins 0,5 $\mu$m, une épaisseur inférieure à 50 nm, et ayant un degré moyen de cristallinité inférieur à 50%;
• 0-20 % en masse de graisse ; et
• au moins 78 % en masse d'eau

dans laquelle la boisson ne contient pas de protéine de lait.

2. Boisson selon la revendication 1, dans laquelle les microfibrilles de cellulose amorphe présentent une épaisseur inférieure à 40 nm, de préférence inférieure à 20 nm.

3. Boisson selon la revendication 1 ou 2, dans laquelle le degré moyen de cristallinité des microfibrilles de cellulose est inférieur à 40 %.

4. Boisson selon l'une quelconque des revendications précédentes, dans laquelle les microfibrilles de cellulose amorphe présentent une longueur d'au moins 1 $\mu$m, encore mieux d'au moins 3 $\mu$m.

5. Boisson selon l'une quelconque des revendications précédentes, dans laquelle les microfibrilles de cellulose amorphe présentent une capacité d'auto-suspension dans de l'eau déminéralisée dans l'intervalle de 50 à 100 % à une concentration de 0,3 % en masse.

6. Boisson selon l'une quelconque des revendications précédentes, dans laquelle la boisson contient de 0,02 à 0,8 % en masse des microfibrilles de cellulose amorphe.

7. Boisson selon l'une quelconque des revendications précédentes, dans laquelle les microfibrilles de cellulose amorphe proviennent d'un matériau de plante choisi parmi du fruit d'agrume, du fruit de tomate, du fruit de pêche, du fruit de prune, du fruit de kiwi, du fruit de pomme, du fruit de mangue, de la betterave à sucre, de la betterave, du navet, du panais, du maïs, de l'avoine, du blé, des pois et des combinaisons de ceux-ci.

8. Boisson selon l'une quelconque des revendications précédentes, dans laquelle la protéine végétale est obtenue à partir de sojas, maïs, riz, pois, blé, sorgho et amande et combinaisons de ceux-ci.

9. Boisson selon l'une quelconque des revendications précédentes, dans laquelle la boisson est un fluide se désépaississant au cisaillement, ayant un rapport de viscosité à faible vitesse de cisaillement (1 s$^{-1}$) à viscosité de coulée (50 s$^{-1}$) de 2 à 2 000.

10. Boisson selon l'une quelconque des revendications précédentes, dans laquelle la boisson comprend de 0,1 à 10 % en masse de graisse, encore mieux de 0,2 à 5 % en masse de graisse.

11. Boisson selon l'une quelconque des revendications précédentes, dans laquelle la boisson comprend de plus de 0,005 à 1 % en masse d'hydrocolloïde choisi parmi de la pectine, du polysaccharide de soja soluble, de la carboxyméthylcellulose, de la gélatine, de l'arabinoxylane, de la dextrine, de l'amidon, de la gomme xanthane, de l'alginate, de la gomme de gellane, de la gomme de welane, de la gomme de diutane, de la gomme de rhamsane, du carragheen, de la gomme guar, de l'agar, de la gomme arabique, de la gomme de ghatti, de la gomme de karaya, de la gomme de tragacanthe, de la gomme de tamarin, de la gomme de caroube, et des combinaisons de ceux-ci.

12. Boisson selon l'une quelconque des revendications précédentes, dans laquelle la boisson comprend de plus de 0,01 à 6 % en masse de saccharide choisi parmi le saccharose, le lactose, le glucose, le fructose et des combinaisons de ceux-ci.

13. Procédé de préparation d'une boisson protéinée prête à boire selon l'une quelconque des revendications précédentes, comprenant les étapes consistant :

• à fournir une suspension d'eau et d'un matériau de paroi de cellule primaire ; et
• à soumettre cette suspension à au moins un passage à travers un homogénéisateur à une pression d'au moins 250 bar

dans lequel une protéine végétale est introduite dans la suspension avant, pendant ou après l'étape d'homogénéisation.

14. Procédé selon la revendication 13, dans lequel la pression d'homogénéisation est d'au moins 500 bar, bien mieux encore d'au moins 700 bar.

15. Procédé selon la revendication 14 ou 15, dans lequel la suspension qui est passée à travers l'homogénéisateur contient 0,005-2 % en masse de matériau de cellule primaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011131457 A

- US 5964983 A

**Non-patent literature cited in the description**

- **D. HARRIS.** *Plant Physiology,* 2010, vol. 153, 420

- **P. RAMULU ; P. UDAYASEKHARA RAO.** *Journal of Food Composition and Analysis,* 2003, vol. 16, 677-685